# EUROPEAN PATENT APPLICATION

(11) **EP 4 779 162 A1**
(43) Date of publication of application: **22.07.2026**
(21) Application number: 24798321.6
(22) Date of filing: 12.09.2024
(51) Int. Cl.: F16B 7/04

(54) **SET OF PARTS FOR CONNECTING METALLIC STRUCTURAL TUBES WITH A NON-CIRCULAR CROSS-SECTION, PROCESS FOR PRODUCING THE PARTS AND USE OF SAME**

(30) Priority: 14.09.2023 PT 2023118919
(71) Applicant: Ferreira Fernandes, António José, 9370-049 Arco da Calheta (PT)
(72) Inventor: FERREIRA FERNANDES, António José, Arco da Calheta (PT)
(74) Representative: Neves, Ana
(86) International application number: PCT/PT2024/050035
(87) International publication number: WO 2025/058533

(57) **Abstract**

The invention refers to a set of metal parts that are placed inside structural metal tubes of non-circular section, for example, of square section.

The set of connecting parts according to the invention comprises a first L-shaped connecting part (10), which is produced from a metal sheet of thickness identical to the thickness of the structural tubes to be connected. The first connecting part (10) is obtained from steps of cutting and bending, resulting in double-layer walls (88) and flaps (89) that allow the part to maintain its integral form, suitable for connecting two structural tubes.

The present invention also relates to a process for producing the connecting or joining parts, comprising the steps of cutting, stamping, drilling, bending, and assembly.

## Description

### TECHNICAL DOMAIN

The subject matter of the present application is included in the field of structural engineering and, more specifically, in the field of connecting and fastening parts for metal structures, in order to ensure their stability, strength, and durability. In particular, the present invention relates to a set of parts that connect metal piping of rectangular or square section, dispensing with welding and other techniques for connecting metal structures.

### BACKGROUND

The connecting and fastening parts of metal structures play an essential role in the construction of metal piping structures. When selecting the methods of construction of structures to be adopted, speed, economy, and safety are essential aspects.

Metal has been used as a fundamental basis in the construction of numerous structures over the last few years. In this context, aspects related to the connection of parts are paramount, namely through methods that appear to be effective and, above all, safe.

In addition, when it is intended to assemble metal structures for subsequent disassembly, namely for outdoor events or other non-permanent situations, the disassembly renders the connecting parts and even the structural piping itself unusable, especially if it has been welded at the joints of the structure.

### PRIOR ART

Metal structures are widely used in civil construction and other areas due to their high strength and malleability properties, namely metal structures built with metal tubes. Proper connection of metal parts, such as metal pipes, is essential to ensure the structural integrity of the construction. Over the years, several connection solutions have been developed, including welding, screws, rivets, and other mechanical fastening techniques.

However, traditional methods of connecting pipes in metal structures bear limitations and challenges. Welds can be complex to perform, require skilled labor and specific equipment. In addition, welding introduces heat into the metal sheet or tube and creates a thermally affected zone, which can develop resistance problems due to the load and consequent creation of inhomogeneous stresses in the structure. Welding is also a more time-consuming and demanding methodology, not only in terms of people's safety requirements, but also in terms of equipment to be transported to the site.

For example, British patent application published under number GB990438A on April 28, 1965 discloses a method of forming a joint between two tubular metal members and having grooved sealing faces, wherein the members are assembled with a soft metal washer between the faces and a portion of at least one of the members is permanently deformed in such a manner that the joint becomes plastic to effect a seal between the faces. This method permanently deforms the pipes, which, on the one hand, imparts structural stress in the connecting zone and, on the other hand, will not be suitable for structures that are not of a permanent nature.

Therefore, there is a growing need for innovative solutions that overcome the limitations of traditional methods of connecting metal structures, aiming at simplifying installation, improving the distribution of stress and loads in the structure, particularly in the pipe connecting zone, and also ensuring good resistance to corrosion, in addition to the ability to adapt to different types of construction.

### SUMMARY OF THE INVENTION

The present invention relates to a set of metal parts that are placed inside structural metal tubes of non-circular section, for example, of square or rectangular section. The parts according to the present invention enable the connection of structural pipes in various directions and angles, without the need for any welds on the structural pipes.

The present invention also relates to a process for producing the connecting or joining parts, comprising five main steps: cutting, stamping, drilling, bending, and assembly. The material used in the parts according to this invention is sheet metal with the same thickness as the wall of the structural pipes to be connected. The measurements to be used prior to cutting the sheet differ according to the size and thickness of the structural tubes to be connected or joined. For example, in the case of an 80 x 80 mm pipe, the dimensions of the connecting part according to the invention will be about 76 x 76 mm.

The metal sheet from which the tubes are produced according to the invention can be a sheet of steel, iron, copper, bronze, brass, a metal alloy, or any type of metal that allows it to be bent.

In a first aspect, the present invention relates to a set of connecting parts for structural tubes of non-circular section for preferably metal structures.

In a second aspect, the present invention relates to a process for producing connecting parts of structural tubes with a non-circular section belonging to the set of the first aspect of the invention.

In a third aspect, the present invention relates to a use of the set of connecting parts of the first aspect of the invention, produced according to the production process of the second aspect of the invention, wherein the use is in structures made with structural tubes of non-circular section, preferably metal.

### SOLUTION TO THE PROBLEM

The set of connecting parts according to the invention includes different metal pipe connecting parts, namely a first L-shaped connecting part, a second connecting part with a closed end that receives drilling for the passage of fasteners, e.g., screws, a third T-shaped connecting part, and a fourth connecting part with both ends open. The connecting parts according to the invention are produced by a process comprising five steps: cutting, stamping, drilling, bending, and assembly, applied to one or more connecting parts, in order to obtain parts with a smooth outer surface, with an outer area only slightly smaller than the area of the internal section of the tubes to be connected, so as to create friction between the connecting parts of the invention and the interior of the tubes to be connected.

Preferably, structural pipes are bolted to the connecting parts to ensure greater stability and resistance, depending on the size of the structural pipes, their length, and the stresses to which the structure will be subjected.

Thus, the structural tubes with a non-circular section, for example, with a square section, these structural tubes not being part of the present invention, can be connected at their ends as will be explained later in this application, forming structures with the desired configuration and that do not require welding. This means that the pipe structure can be assembled more quickly and safely. Furthermore, in cases wherein the structure is not permanent, such as stages for summer shows, or sports events or other types of events, the structural tubes, once quickly and easily disassembled, can be reused in another structure, using the parts according to the invention to connect them.

The set of parts according to the invention can also connect structural tubes of non-metal materials, such as plastic structural tubes, as long as they have the appropriate dimensions, so that they can be connected by the connecting parts according to the invention.

### ADVANTAGEOUS EFFECTS OF THE INVENTION

The set of connecting and fastening parts and the method of producing them has the advantage of allowing the use of tubes with a non-circular section, for example, square or rectangular, with various sizes and thicknesses available on the market. This fact eliminates the use of welding in the connecting of structural tubes, which, in addition to avoiding the inherent disadvantages of welding techniques already mentioned above, also allows for faster, safer, more economical, and aesthetically more pleasing construction of structures. In addition, it also allows for a subsequent disassembly of the structure, if necessary, which is easier and offers the possibility of reusing all the piping and connecting parts according to the invention.

The parts of the invention parts set are connected through the inside of the structural tubes, which provides the structure with additional security. Even if it is necessary to fix the structural tubes, such as by screws, rivets, or glue, preferably by screws, on the outside of the structural tubes, the set of parts of this invention offers the advantages mentioned above.

### BRIEF DESCRIPTION OF THE FIGURES

With the purpose of promoting an understanding of the principles according to the embodiments of the present invention, reference will be made to the embodiments illustrated in the Figures and the language used to describe them. In any case, it should be understood that there is no intention to limit the scope of the present invention to the content of the Figures. Any subsequent alterations or modifications to the inventive features illustrated herein, as well as any additional applications of the principles and embodiments of the invention illustrated, which would normally occur to a person skilled in the art in possession of this description, are considered to be within the scope of the claimed invention.
**Figure 1** - represents a perspective view of an embodiment of a first connecting part (10) according to the invention;
**Figure 2A** - schematically represents an embodiment of a first single sheet (1) according to the present invention;
**Figures 2B and 2C** - schematically represent a form of performing steps of the bending stages of a first single sheet (1);
**Figures 2D and 2E** - schematically represent perspective views of the embodiment of a first connecting part (10) illustrated in Figure 1;
**Figure 3** - represents a perspective view of an embodiment of a second connecting part (20) according to the invention;
**Figure 4A** - schematically represents an embodiment of a second single sheet (2) according to the present invention;
**Figures 4B** to **4E** - schematically represent a form of realization of the steps of bending a second single sheet (2) of the embodiment of a second connecting part (20) illustrated in Figure 3;
**Figure 5** - represents a perspective view of two other embodiments of a second connecting part (20) according to the invention;
**Figure 6A** - schematically represents an embodiment of a second single sheet (2) for forming one of the parts illustrated in Figure 5 according to the present invention;
**Figures 6B** to **6F** - schematically represent an embodiment of the bending step of the embodiment of the second single sheet (2) illustrated in Figure 6A of an embodiment of the second connecting part (20) illustrated in Figure 5;
**Figure 7** - represents a perspective view of an embodiment of a third connecting part (30) according to the invention;
**Figure 8A** - schematically represents an embodiment of a third single sheet (3) according to the present invention;
**Figures 8B** - schematically represents a first step of the bending stage of the third single sheet (3) illustrated in Figure 8A;
**Figures 8C and 8D** - schematically represent two perspective views of the embodiment of a first sub-part of a third part (30A) according to the present invention;
**Figure 8E** - schematically represents an embodiment of a fourth single sheet (4) according to the present invention;
**Figure 8F** - schematically represents an embodiment of a first step of the bending stage of the fourth single sheet (4) illustrated in Figure 8E;
**Figure 8G** - schematically represents a perspective view of the embodiment of a second sub-part of a third part (30B) according to the present invention;
**Figure 8H** **-** schematically represents an embodiment of a final step of the assembly stage of the third connecting part (30) illustrated in Figure 7;
**Figure 8I** - schematically represents a perspective view of an embodiment of the third connecting part (30);
**Figure 9** - represents a perspective view of an embodiment of a fourth connecting part (40) according to the invention;
**Figure 10A** - schematically represents the embodiment of a fourth single sheet (4) according to the present invention, illustrated in Fig. 8A;
**Figure 10B** - schematically represents another embodiment of a fourth single sheet (4) according to the present invention;
**Figure 10C** - schematically represents a perspective view of a first sub-part of fourth part (40A) and a second sub-part of fourth part (40B) according to the invention;
**Figure 10D** - schematically represents an embodiment of a final step of the assembly stage of the embodiment of the fourth connecting part (40) illustrated in Figure 9;
**Figure 10E** - schematically represents another perspective view of the embodiment of the fourth connecting part (40) illustrated in Figure 9;
**Figure 11** - represents a perspective view of an embodiment of a use of the first connecting part (10) according to the present invention;
**Figure 12** - represents a perspective view of an embodiment of another use of the first connecting part (10) and the second connecting part (20) according to the present invention;
**Figure 13** - represents a top perspective view of the same embodiment of the use illustrated in Figure 12; and
**Figure 14** - represents a side perspective view of another embodiment of a use according to the invention.

### DESCRIPTION OF THE EMBODIMENTS

The present invention relates to a set of connecting parts for structural tubes of non-circular section, for example, of rectangular section or square section. The connecting parts of the present invention are made from metal sheet of the same thickness as the structural metal tubes to be connected, wherein the metal sheet is subjected to cutting, drilling, stamping, bending, and/or assembly, without the use of any welding or brazing techniques. The set of connecting parts of the present invention comprises, in an initial embodiment, a first L-shaped connecting part and a second parallelepiped tube-shaped connecting part, wherein one of the ends is closed. The metal sheet of the second connecting part is subject to drilling in the zone that after bending will be the closed end of the second connecting part, as can be seen in the drawings accompanying this application.

After being subjected to the steps of cutting, drilling, and bending, the first and second connecting parts mentioned can connect preferably metal structural tubes from the inside, through friction, since the equivalent outer diameter of the connecting parts of the invention is slightly smaller than the equivalent inner diameter of the structural tubes to be connected. For example, for a structural tube with a square section and a standard dimension of 80 x 80 mm, the outer dimension of the square section of the connecting parts according to the invention that will connect said structural tubes will be 76 x 76 mm. To connect structural tubes of other dimensions, the dimensions of the connecting parts of this invention will be adapted proportionally.

Details regarding examples of connecting structural tubes with the connecting parts of the present invention will be provided with respect to the following drawings.

The set of connecting parts for structural tubes may further comprise a third T-shaped connecting part, and a fourth tubular, parallelepiped-shaped connecting part with open ends. The third and fourth connecting parts each comprise two sub-parts. Each of the sub-parts is made from metal sheet of identical thickness to that of the structural tube wall to be connected, is subjected to steps of cutting, stamping, and bending, and in certain embodiments also to drilling. The two sub-parts of each of the third and fourth connecting parts are then subjected to assembly with one another, wherein there are friction elements, which are protrusions produced in the stamping stage, that interlock between the two sub-parts of each third and fourth connecting parts, as illustrated in the drawings and will be described below.

The invention also refers to the process of producing these parts, wherein the process comprises the five steps already mentioned. The steps of cutting, drilling, stamping, bending, and assembly utilize conventional methods existing in the art, which one skilled in the art will be able to understand. For example, the cutting step can be performed by mechanical tool, laser, waterjet, or other known process. The stamping step can be carried out by a press or by a die. The drilling step can be carried out using a conventional sheet metal drilling tool, such as a mechanical drill. The bending step can be done by a conventional process of molding, forming, or profiling sheet metal. The assembly of the parts can be performed manually.

The invention further refers to the use of the set of connecting parts of the invention in structures of preferably metal structural tubes.

Next, the drawings will be described to outline the embodiments of the present invention, which also illustrate examples of application of the present invention.

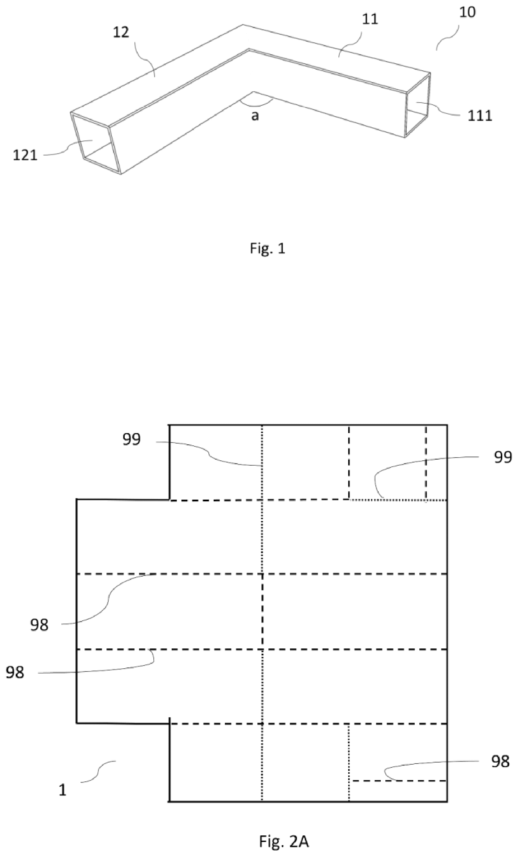

Figure 1 represents a perspective view of an embodiment of a first connecting part (10) according to the invention for connecting structural tubes of non-circular section, for example, of square section. The first connecting part (10) shown in Figure 1 has the shape of an L comprising a first L arm, or first arm of the first part (11), and a second L arm, or second arm of the first part (12). The first (11) and second (12) arms of the first part are represented with identical lengths, but may also have different lengths. The first arm of the first part (11) and the second arm of the first part (12) make an angle *a* to each other. This angle is within the range of 10° to 170°, preferably from 30° to 150°, more preferably from 45° to 135°, and, in the most preferred form represented in Figure 1, the angle *a* is approximately 90°.

The first (11) and second (12) arms of the first part connect at an elbow as shown in Figure 1 and as in an L shape, and terminate, respectively, at an end of the first arm (111) and at an end of the second arm (121) which are both open. The ends of the first arm (111) and the second arm (121) are open, as is the entire part, which is hollow. The first connecting part (10) is an integral part obtained from a first single sheet (1) which will be discussed with respect to Figure 2A.

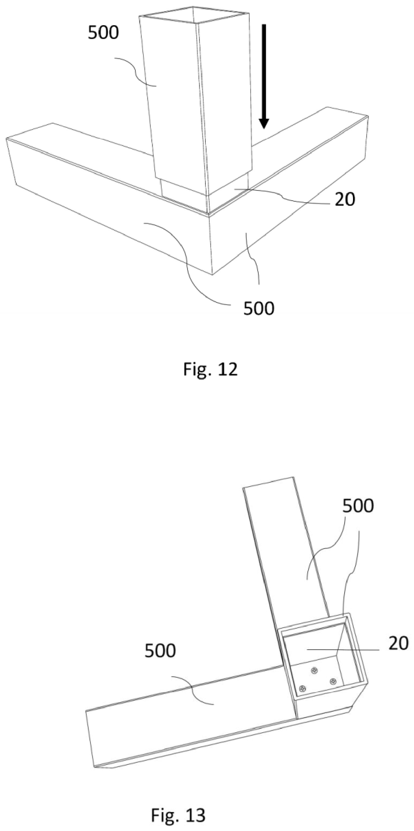

The first connecting part (10) has a wall thickness that is equal to the wall thickness of the preferably metal structural tubes of square section (500), represented, for example, in Figure 12, which will be discussed later. The first connecting part (10) is used to connect two preferably metal structural tubes of square section (500), which have a slightly larger square section area, in an equivalent proportion to the following example: for a structural tube with a square section area of 80 x 80 mm, the outer dimension of the section area of each of the first arm of the first part (11) and the second arm of the first part (12) would be 76 x 76 mm. In this way, when the first connecting part (10) is inserted into the interior of the preferably metal structural tubes (500), with the first arm of the first part (11) inserted into a metal structural tube (500) and the second arm of the first part (12) into the other metal structural tube (500), it is held by friction on the interior surface of the preferably metal structural tubes (500) that it will connect.

The preferably metal structural tubes (500) are not part of the present invention, as there are already structural tubes (500) made of metal and other materials available on the market.

The first connecting part (10) may comprise holes (not shown) on one of its surfaces in an arrangement to receive fastening elements, for example, screws, for securing another connecting part, for example, a second connecting part (20) according to the invention. An example of a fastening between an embodiment of a first connecting part (10) and an embodiment of a second connecting part (10) according to the invention is illustrated in Figure 13, which will be discussed ahead.

Figure 2A schematically represents an embodiment of a first single sheet (1) according to the present invention. The first single sheet (1) is made of a metal material and has a thickness equal to the thickness of the preferably metal structural tubes (500) that the first connecting part (10) will connect, wherein the first connecting part (10) is obtained from the first single sheet (1) illustrated in Figure 2A.

The first single sheet (1) shown in Figure 2A is cut into the represented shape, that is, from a rectangular sheet, from which a first connecting part (10) with a square section is obtained through steps of cutting, drilling, and bending. The dashed lines (98) represent bend lines, i.e., lines along which the bending of the first single sheet (1) will be applied, and the dotted lines (99) represent cut lines, i.e., lines along which a cut will be applied to the first single sheet (1). The first single sheet (1) is subjected, through the production process according to the invention, to steps of cutting, drilling, and bending, in order to obtain a first connecting part (10) that remains integral, without requiring welding. The first connecting part (10) is ready for use in connecting metal structural tubes (500), as will be described later with reference to the remaining drawings.

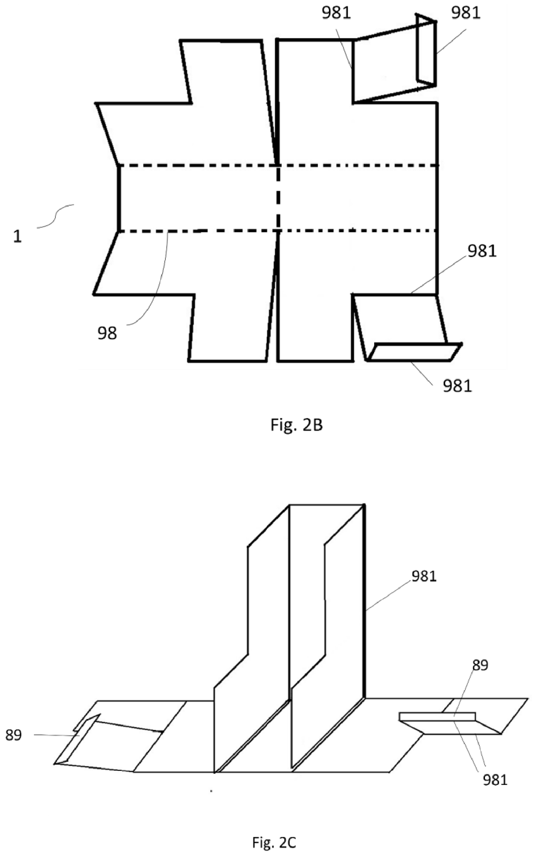

Figures 2B and 2C illustrate steps of the bending stage of the first connecting part (10) from the first single sheet (1), already cut, according to the production process of the invention. The first single sheet (1) is illustrated in Figure 2B after the cutting step and after the initial steps of the bending stage, wherein the illustrated shape is produced wherein in certain embodiments the first single sheet is subjected to a bending step to produce an embodiment of a first connecting part (10). In Figure 2B, the dashed lines (98) along which the first single sheet (1) will be subjected to bending are illustrated. The solid lines (981) represented in Figure 2B illustrate lines along which steps of the bending stage of the first single sheet (1) were applied.

The Figure 2C illustrates subsequent steps of the bending stage to which the first single sheet (1) is subjected. Also in this Figure 2C, solid lines (981) are illustrated along which bending step procedures were applied. The flaps (89) produced in the bending step will play an important role in the production of the first connecting part (10), which cooperate with the remaining steps of the bending process to dispense with screws, welds, or other technologies or techniques to keep the first connecting part (10) in the desired shape.

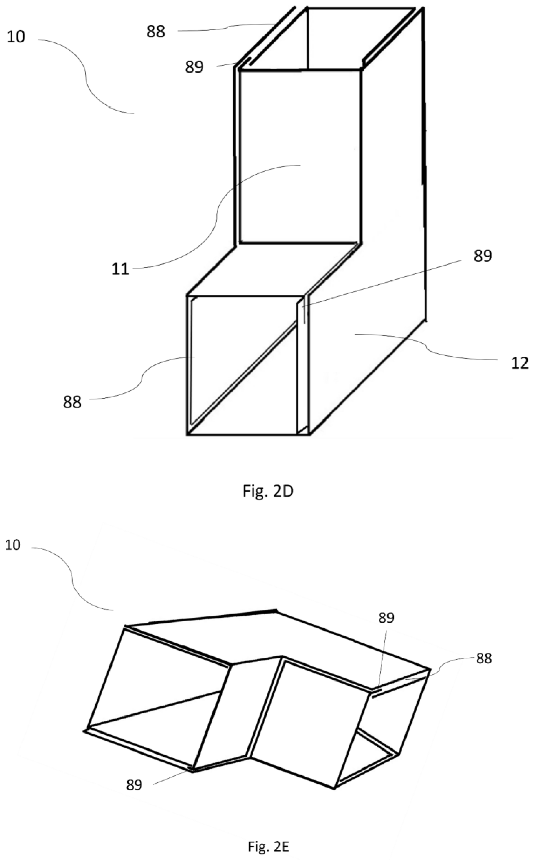

Figure 2D illustrates a perspective view of the first connecting part (10) after the completion of the bending step. Figure 2D shows that on the outer side walls of the first connecting part (10) there is a double layer (88) wherein the sheet is overlapped, and Figure 2D also shows that the flaps (89) are folded inward into the double layer (88), thus ensuring the stability of the first single part (10) when assembled. With this bending step, the sidewalls of the parts become more resistant and thicker, as their sides are now composed of more than one layer of sheet metal. The first arm of the first part (11) and the second arm of the first part (12) are intended to be inserted into the interior of structural tubes (500), preferably metal as already mentioned, in order to connect them at a right angle to each other, in the embodiment of the first connecting part (10) represented in Figure 2D.

Figure 2E shows another perspective view of the first connecting part (10), in which the flaps (89) can also be seen wedged between the double layer (88) of the sheet on the outer side walls of the first connecting part (10), which is thus terminated and ready to use, without the need for any subsequent operation to ensure its integrity, such as welding.

In this way, the steps of cutting and bending according to the invention produce a first connecting part that is smooth and uniform on the outer surfaces, having dimensions such that, through friction, it allows fitting inside structural tubes (500), as will be explained in more detail later.

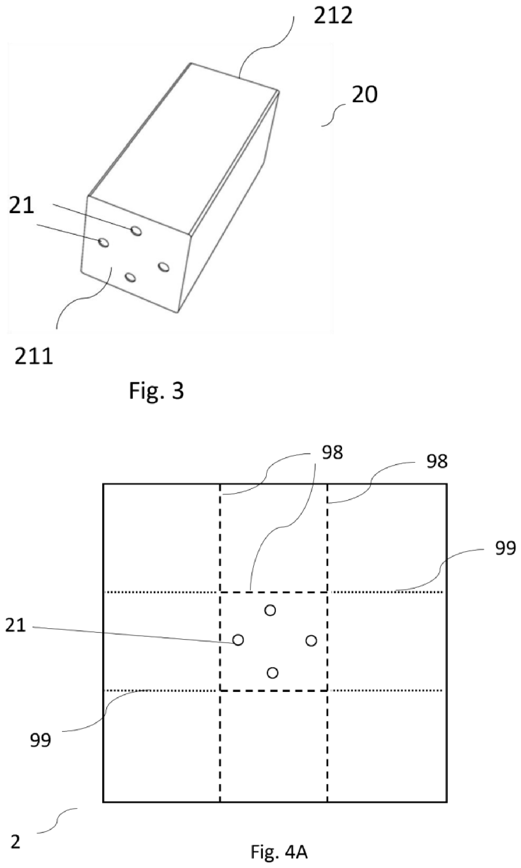

Figure 3 illustrates a perspective view of an embodiment of a second connecting part (20) according to the invention. The second connecting part (20) has a tubular shape with a non-circular section, for example, a rectangular section or a square section, as illustrated in Figure 3, wherein one end of the second connecting part (20) is open (212) and the other end is closed (211) and forms an angle with the tubular walls of the second connecting part (20), wherein in the embodiment of Figure 3 the angle is 90°. The closed end (211) comprises holes (21) that receive fastening elements from the second connecting part (20). The number of holes (21) that the closed end (211) comprises can be one hole (21), two holes (21), three or more holes (21), depending on the dimensions of the cross-sectional area of the second connecting part (20) and also depending on the length of the structure tubes (500) that are intended to be connected by the second connecting part (20). In the preferred embodiment illustrated in Figure 3, the closed end (211) comprises four holes (21). The arrangement of the holes (21) on the closed base (211) of the second connecting part (20) depends on the configuration of the structure that is intended to be created. For example, in the use illustrated in Figure 12, which will be discussed in greater detail later, the holes (21) preferably assume the arrangement illustrated in Figure 3 and Figure 4A.

For different uses of the second connecting part (20), for example, wherein the second connecting part (20) is applied vertically, the arrangement of the four holes (21) can be near the four vertices of the closed end (211) (arrangement not shown). In other words, the location and the arrangement of the holes (21) depend on the forces present in the structure to which the second connecting part (20) is intended.

The fastening elements used to secure the second connecting part (20) can be screws, or they can be other fastening elements available on the market and suitable for securing the second connecting part (20), as one skilled in the art will understand. The second connecting part (20) can be fixed, through its closed end (211) and said fastening elements, to another connecting part of the present invention. For example, the second connecting part (20) can be fixed to a first connecting part (10) according to the present invention, as is well illustrated in Figures 12, 13, and 14, which will be discussed further in this application.

Figure 4A schematically illustrates an embodiment of a second single sheet (2) according to the present invention. Similarly to what was described above for the first single sheet (1) illustrated in Figure 2A, the second single sheet (2) is made of a metal material and has an identical thickness to the thickness of the preferably metal structural tubes (500) that the second connecting part (20) will connect, wherein the second connecting part (20) is obtained from the second single sheet (2) illustrated in Figure 4A.

The second single sheet (2) represented in Figure 4A is cut into the shape shown, that is, from a sheet that can be rectangular or square, a second connecting part (20) with a section, for example, square, is obtained from the cutting and bending steps, according to the invention. The second single sheet (2) is also subject to a drilling step, as will be evident to a person skilled in the art. The dashed lines (98) represent lines that will be subject to the bending step and the dotted lines (99) represent lines that will be subject to a cutting step. The second single sheet (2) is subjected, through the production process according to the invention, to steps of cutting, drilling, and bending, in order to obtain a second connecting part (20) that remains integral, without the need for welding. The second connecting part (20) is ready to be used for connecting structural metal tubes (500), as will be described later with reference to the remaining drawings.

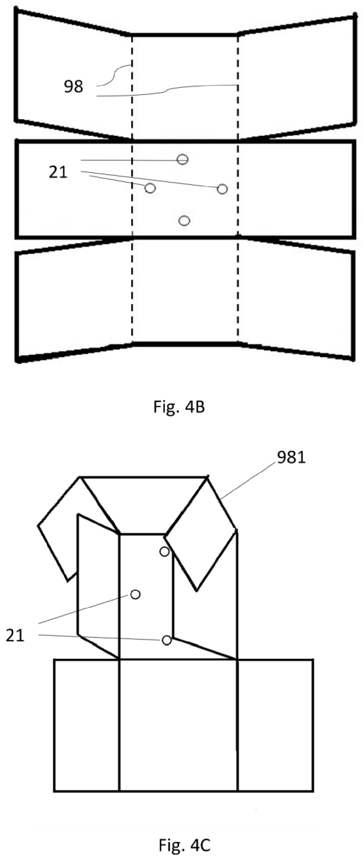

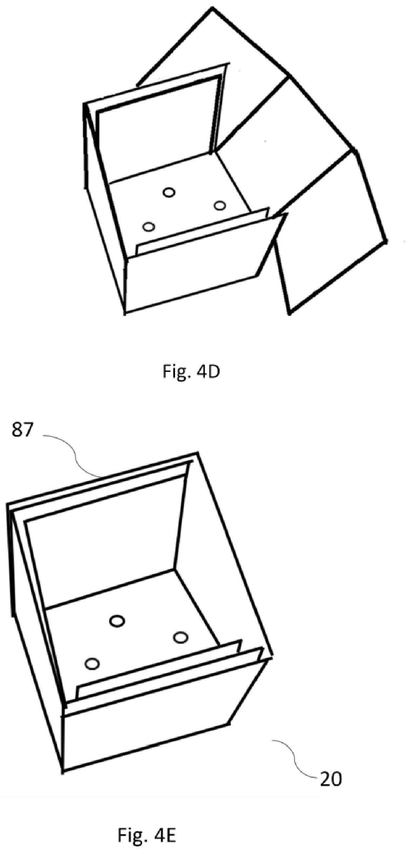

Figures 4B, 4C, 4D and 4E illustrate the steps of the bending stage to obtain the second connecting part (20) from the second single sheet (2), already cut, according to the production process of the invention.

In Figure 4B, the second single sheet (2) is illustrated after the cutting step along the dotted lines (99) represented in Figure 4A, followed by the drilling and bending steps along the dashed lines (98), illustrated in the following figures. The holes (21) for receiving fastening elements already discussed above are also illustrated in Figure 4B.

Figure 4C illustrates steps of the bending stage performed along the solid lines (981) to which the second single sheet (2) is subjected. Figure 4C also illustrates the holes (21) already discussed above.

Figure 4D illustrates another step in the bending stage for the production of the second connecting part (20).

Figure 4E represents the embodiment of the second connecting part (20) illustrated in Figure 3, after the completion of the bending step according to the process of the present invention. In the illustrated embodiment, the second connecting part (20) according to the invention features triple side walls (87), in which three layers of metal sheet are superimposed, providing the same effects already discussed for the double layer (88) obtained in the first connecting part (10).

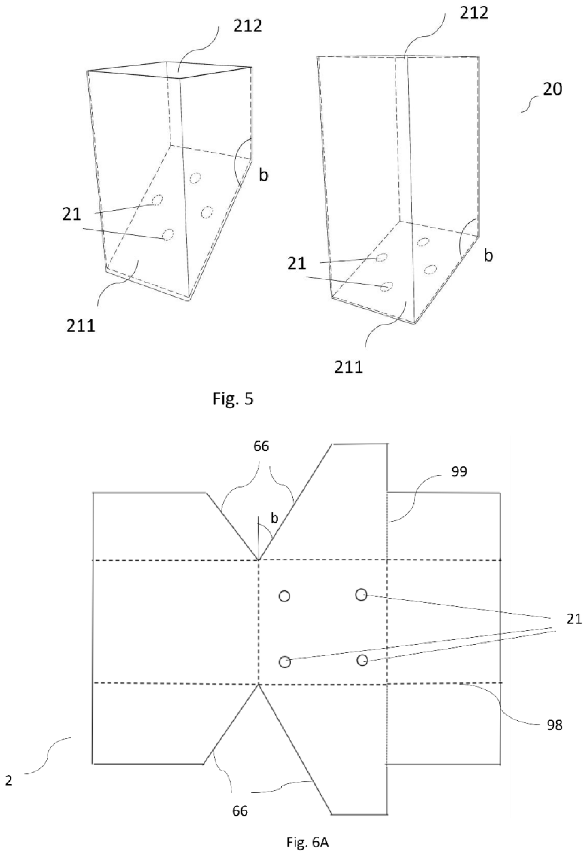

Figure 5 represents perspective views of two other embodiments of the second connecting part (20), wherein the angle *b* between the closed end (211) and the tubular walls of the second connecting part (20) is different from 90°, and the closed end (211) has an oblique orientation relative to the tubular walls of the second connecting part (20), also comprising holes (21). This oblique orientation can correspond to an angle value *b* between 10° and 170°, preferably from 30° to 150°, and more preferably the angle *b* belongs to the range from 45° to 135°, wherein the most suitable angle *b* is selected for the structure to be built with the structural tubes (500) of non-circular section, for example, of square section, which the second connecting part (20) will connect, after being fixed to another connecting part according to the invention, for example, to the first connecting part (10). Since the description of Figure 5 will, in all other respects, be identical to the above description regarding Figure 3, it will not be described here in greater detail.

Figure 6A schematically illustrates another embodiment of a second single sheet (2) according to the present invention, from which one of the embodiments represented in Figure 5 can be obtained. In the second single sheet (2) of Figure 6A, the oblique cuts (66) determine the slant of the closed end (211) relative to the tubular walls of non-circular section of the second connecting part (20), that is, they determine angle *b*.

As explained for Figure 4A, the second single sheet (2) shown in Figure 6A is subjected to a cutting step along the dotted lines (99) and bending step along the dashed lines (98).

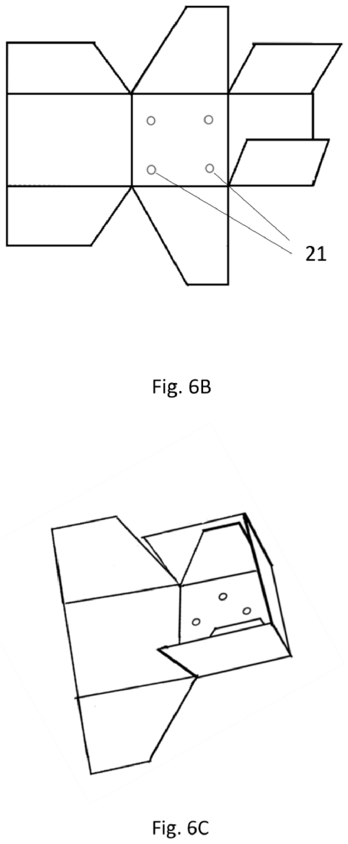

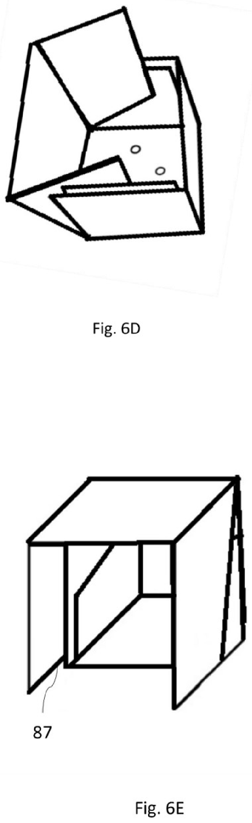

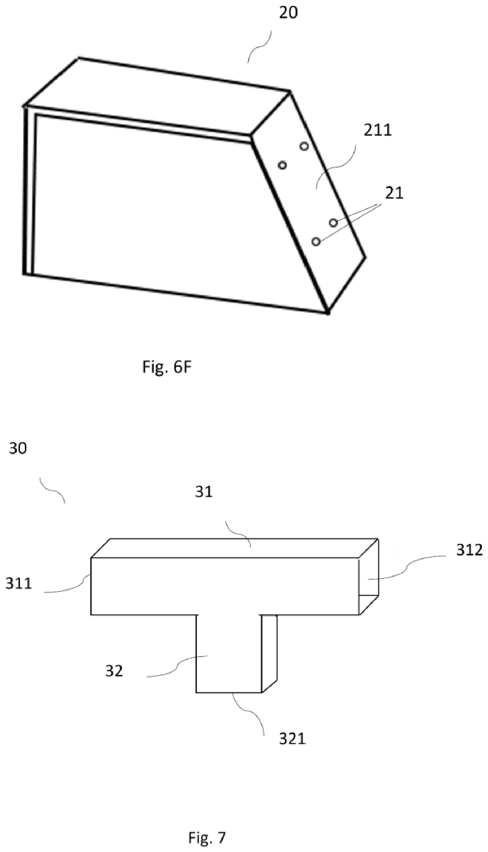

Just as for Figures 4B, 4C, 4D and 4E, Figures 6B, 6C, 6D and 6E also illustrate the steps of the bending stage of the second single sheet (2) of Figure 6A, in an identical manner and therefore will not be described here in greater detail. In Figure 6F, however, there is a final step that applies only to the embodiments of the second connecting part (20) in which angle *b* is different from 90°. In Figure 6E, the unevenness between one of the layers of the triple layer (87) of sheet metal of the second single sheet (2) is visible after the preceding bending steps. To ensure that the second connecting part (20) has the edges of the open end (212) at the same level, it is necessary to perform the final step of the production stage, in which the slant of the closed end (211) defined by angle *b* different from 90° is obtained, and in which the leveling of the edges of the open end (211) is done, thus obtaining one of the embodiments of the second connecting part (20) illustrated in Figure 5.

Figure 7 represents a perspective view of an embodiment of a third connecting part (30) according to the invention for connecting structural tubes of non-circular section, for example, of square section. The third connecting part (30) shown in Figure 7 has the shape of a T comprising a first T arm, or first arm of the third part (31), and a second T arm, or second arm of the third part (32). The first (31) and second (32) arms of the third part are represented with different lengths, but they can also have identical or equal lengths. The first arm of the third part (31) and the second arm of the third part (32) are substantially perpendicular to each other.

The first (31) and second (32) arms of the third part connect in a central zone of the first arm of the third part (31) as illustrated in Figure 7, and just like in a T shape.

The first arm of the third part (31) has two open ends (311, 312). The second arm of the third part (32) terminates, on the side opposite to the side wherein it connects the first arm of the third part (31), at an open end (321). As with the parts described previously, that is, the first connecting part (10) and the second connecting part (20); the third connecting part is hollow, tubular, with a non-circular section, for example, with a rectangular or square section. The third connecting part (30) is obtained from a third single sheet (3) and a fourth single sheet (4) that are assembled as will be discussed later.

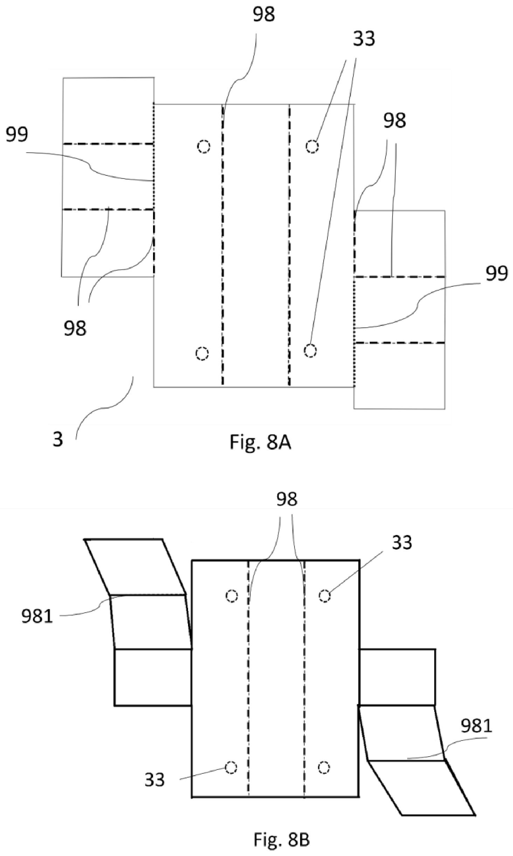

Figure 8A schematically represents an embodiment of a third single sheet (3) according to the present invention, from which a first sub-part of the third connecting part (30A) will be obtained, which, together with a second sub-part of the third connecting part (30B) fitted into it, will give rise to the embodiment of the third connecting part (30) represented in Figure 7.

The third single sheet shown in Figure 8A is cut in an appropriate shape, for example, in the shape shown in Figure 8A, which may resemble three side-by-side and staggered rectangles. As explained previously for the other connecting parts of the invention, the dashed lines (98) represent lines intended to receive the bending steps, and the dotted lines (99) are intended to receive a cut in the third single sheet (3). Preferably before the bending stage, the third single sheet (3) is subjected to a stamping stage, in which friction elements (33) are produced, whose location is marked in Figure 8A, but in other embodiments of the invention, the friction elements (33) can be placed in other suitable locations of the third single sheet (3).

Figure 8B schematically represents a first step of the bending stage of the third single sheet (3) illustrated in Figure 8A, wherein the solid lines (981) have already been subjected to a first bending step and the dashed lines (98) will subsequently be subjected to a bending step. Figure 8B also illustrates the friction elements (33) obtained by the stamping step.

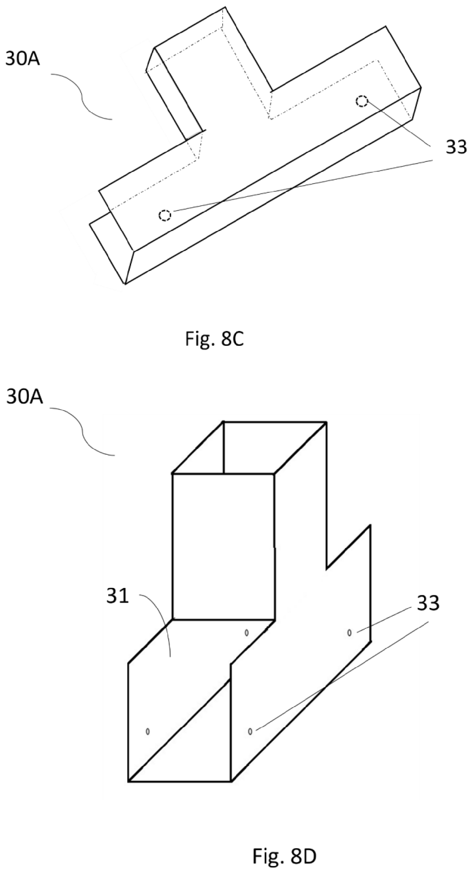

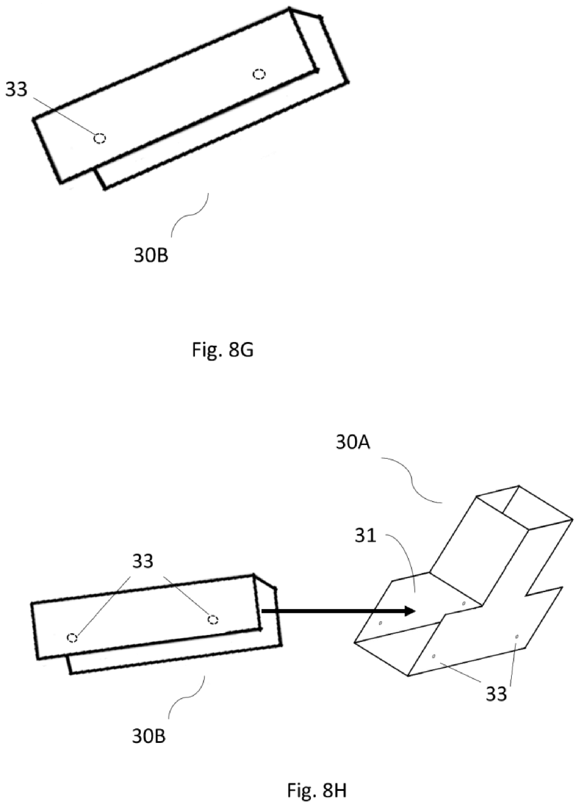

Figures 8C and 8D show two perspective views of a first sub-part of third part (30A) obtained from the third single sheet (3), wherein the friction elements (33) are intended to come into contact with friction elements (33) of a second sub-part of third part (30B), in an assembly step later. In the steps of the bending stage, the pressure exerted on the sheet will contribute to an optimized fit between the first (30A) and second (30B) sub-parts of the third part, as will be seen in relation to Figure 8H. The first sub-part (30A) of the third part has open ends as illustrated and discussed in relation to Figure 7, and also has the lower zone of the first arm of the third part (31) open in which the second sub-part of the third part (30B) will be received as will be seen later.

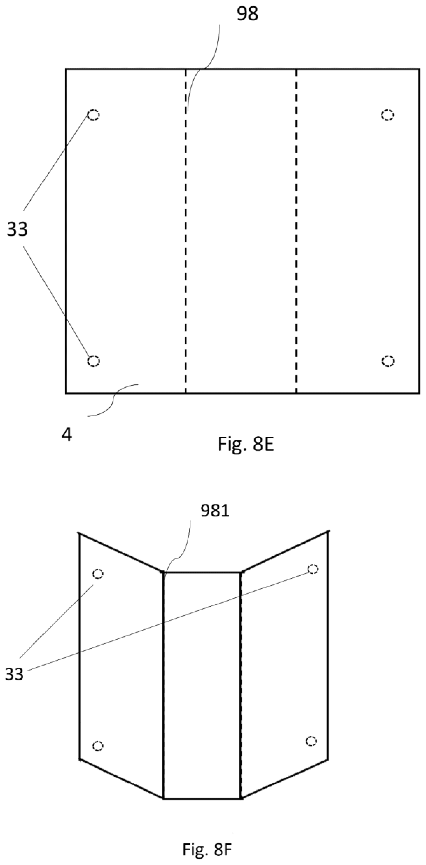

Figure 8E schematically illustrates an embodiment of a fourth single sheet (4) according to the present invention. Similarly to what was described above for the first single sheet (1), for the second single sheet (2), and for the third single sheet (3), the fourth single sheet is made of a metal material and has a thickness identical to the thickness of the structural tubes (500), preferably metal, that the third connecting part (30) will connect, wherein a second sub-part of the third part (30B) is obtained from the fourth single sheet (4).

The fourth single sheet (4) shown in Figure 8E is cut in the shape shown, that is, from a sheet that can be, for example, rectangular. A second sub-part of the third part (30B) with a square section, for example, will be obtained from it, through the aforementioned steps of stamping, for the production of friction elements (33), bending along the dashed lines (98), and assembly, according to the invention.

Figure 8F illustrates steps of the bending stage, wherein the bending was performed over the solid lines (981).

Figure 8G illustrates a second sub-part of the third part (30B) after the bending step and ready to be subjected to an assembly step in order to obtain an embodiment of the third connecting part (30) according to the invention.

Figure 8H represents the assembly stage of the third connecting part (30), in which the second sub-part of the third part (30B) is inserted into the interior of the first arm of the third part (31) of the first sub-part of the third part (30A), as shown by the arrow illustrated in the Figure 8H. The friction elements (33) provided in both the first (30A) and second (30B) sub-parts ensure the friction-fit between them, thus forming a third stable, robust, and resistant connecting part (30), ready to connect three structural tubes (500), within which the first arm of the third part (31) and the second arm of the third part (32) will be inserted, wherein the first arm of the third part (31) connects two tubes (500), with one structural tube (500) entering each end (311, 312) of the first arm of the third part (31) (not shown).

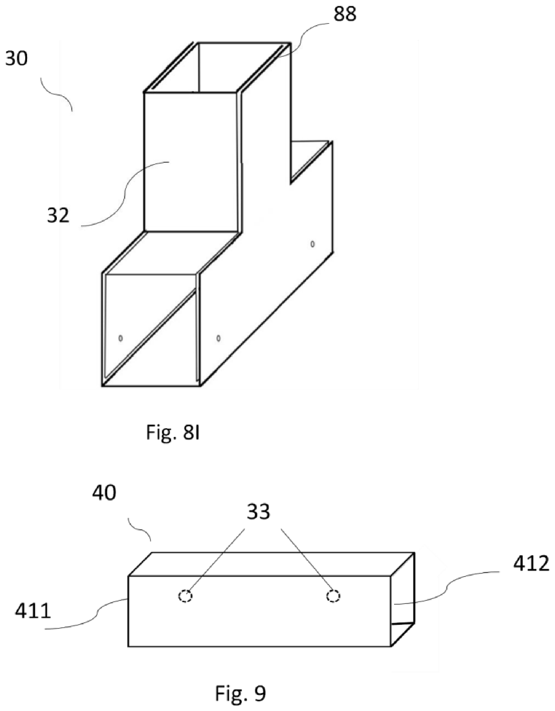

Figure 8I schematically illustrates a perspective view of an embodiment of the third connecting part (30), after the completion of the assembly stage. Also in this case, the side walls have a double layer (88) as shown, wherein the outer layer of one side of the double layer continues extending to the inner layer of the double layer of the opposite wall of the second arm of the third part (32). This double layer has the function and advantages discussed above for the other parts according to the invention and so will not be discussed here in greater detail.

Figure 9 represents a perspective view of an embodiment of a fourth connecting part (40) according to the invention, comprising two open ends (411,412). This fourth connecting part (40), although similar to the second connecting part (20) but with both ends open, is obtained from two single fourth sheets (4) and not from just a single sheet. The fourth connecting part (40) is also depicted comprising friction elements (33).

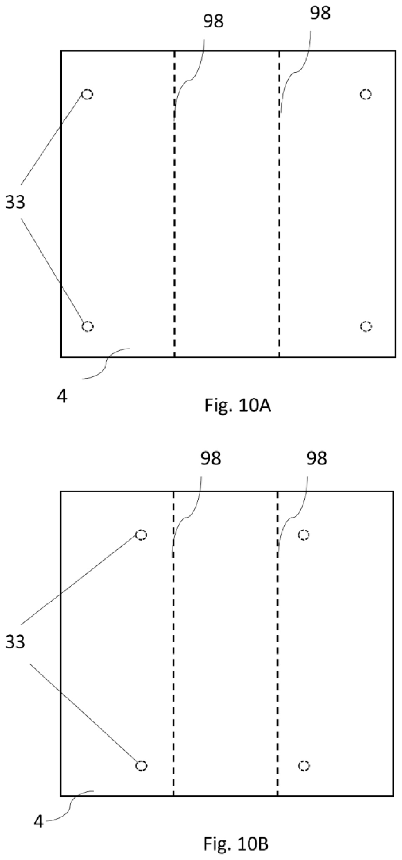

Figure 10A schematically represents the embodiment of a fourth single sheet (4) according to the present invention, also illustrated in Fig. 8A, displaying friction elements (33) situated in a zone spaced apart from the dashed lines (98) of the fourth single sheet (4).

Figure 10B schematically illustrates a fourth single sheet (4) according to the present invention, wherein the friction elements (33) have been stamped in a zone closer to the central section, that is, closer to the dashed lines (98) where the bending stage steps will be applied.

Both fourth single plates (4) illustrated in Figures 10A and 10B are subjected to the stamping step, for the production of the friction elements (33) already discussed, and then are subjected to the bending step in a manner identical to that described for the fourth single sheet (4) of Figure 8E.

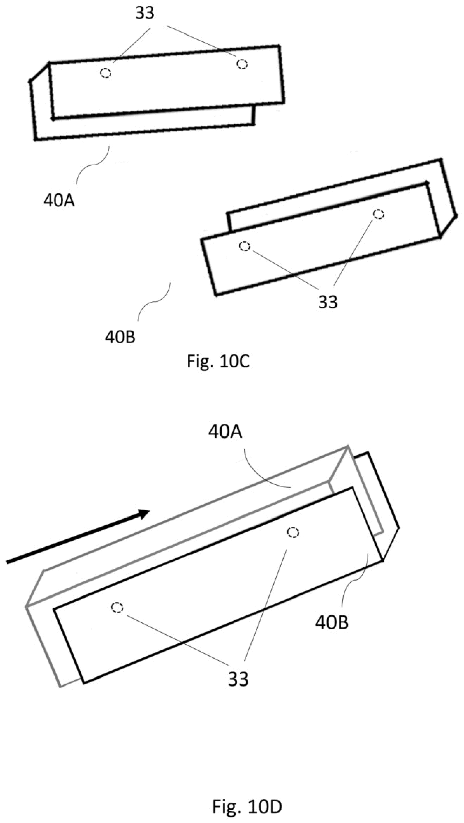

Figure 10C illustrates a first sub-part of fourth part (40A) and a second sub-part of fourth part (40B) obtained from the two unique fourth plates (4) illustrated in Figures 10A and 10B, wherein it is visible that the friction elements (33) are placed in different positions in the two sub-parts (40A, 40B).

Figure 10D illustrates the assembly step of the fourth connecting part (40), in which the second sub-part of the fourth part (40B) receives inside it and facing towards it the first sub-part of the fourth part (40A), as shown by the arrow illustrated in Figure 10D. The friction elements (33) provided in both the first (40A) and second (40B) subparts of the fourth part ensure friction-fit between them, thus forming a stable, robust, and resistant fourth connecting part (40), ready to connect structural tubes (500), into which the fourth part (40) will be inserted (not shown).

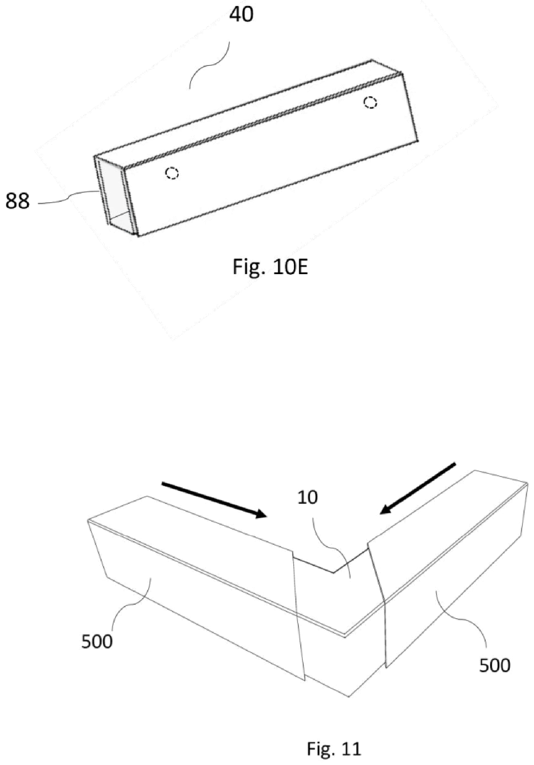

Figure 10E schematically illustrates a perspective view of an embodiment of the fourth connecting part (40), after the completion of the assembly stage. Also in this case, the side walls have a double layer (88) opposed and fitted by friction through the friction elements (33). This double layer has the function and advantages discussed above for the other parts according to the invention and so will not be discussed here in greater detail. The fourth connecting part can connect two structural tubes (500) that are end-to-end with each other and can be bolted to the fourth connecting part (40) for better structural results (not shown).

Figure 11 represents a perspective view of an embodiment of a use of the first connecting part (10) according to the present invention. In this Figure, it can be seen that the first connecting part (10), with a non-circular section, that is, a square section, has its arms inserted, each one, inside two structural tubes (500), also with a non-circular section, for example, a square section with an area slightly larger than the area of the section of the first connecting part (10), as already illustrated in the example above, for a structural tube (500) with a square section of 80 x 80 mm and a wall thickness of 2 mm. Figure 11 represents a phase of the assembly of the structural tubes (500) in the first union part (10), wherein after the assembly is completed in the direction represented by the arrows in Figure 11, the first connecting part (10) becomes invisible inside the tubes (500).

Figure 12 represents an embodiment of use of the present invention, wherein a second connecting part (20) was fixed by fastening elements, for example, it was screwed onto the elbow formed by the connection of the tubes (500) and the first connecting part (10) in its interior, as discussed in relation to Figure 11. In other words, fastening elements such as screws, when tightened into the second connecting part (20) will also pierce the structural tubes (500) already connected by a first connecting part (10) according to the invention, and the first connecting part (10) itself that is inside it. In this way, greater safety is provided to the structure, thus reinforcing the connection of the structural pipes (500) and also making it more aesthetically pleasing. A third structural tube (500) is placed in an upright position shown in Figure 12, being inserted in the direction of the arrow illustrated in the drawing, so as to be connected to the other two tubes (500). The third structural tube (500) connected by the second connecting part (20) can be fixed, for example, by means of screws (not shown) to the second connecting part (20) for better results and safety in the structure. The need to screw the tubes (500) depends on the size of the structure and the forces it must withstand.

Figure 13 shows a top perspective view of the same embodiment of use illustrated in Figure 12, wherein the fastening screws of the second connecting part (20) are visible, connected to the structural tubes by a first connecting part (10) according to the invention. The second connecting part (20) is also visible inside the structural tube (500) shown vertically in Figure 12.

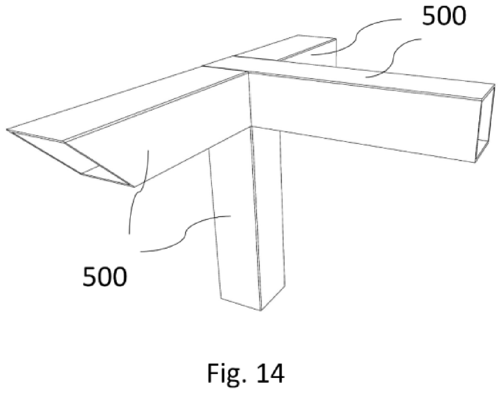

Figure 14 represents a side perspective view of another embodiment of a use according to the invention, wherein another second connecting part (20) is fixed, for example, with screws on the opposite side of the second connecting part (20) visible in Figure 12, forming the structure of Figure 13, in which a fourth structural tube (500) with an obliquely cut end was inserted over this other second connecting part (20), which is invisible in Figure 13.

Starting from the structure created in any of Figures 11, 12, 14, it is possible to construct any structure with structural tubes (500), preferably metal with a non-circular section, for example, a square section available on the market, through the use of any of the connecting parts (10,20,30,40) according to the invention and through their production process, including steps of cutting, stamping, drilling, bending, and/or assembly, as defined by the accompanying claims. A structure built with a set of parts of the invention can be easily dismantled and both the structural tubes (500) used and the connecting parts of the invention themselves can be reused, thus contributing to a cleaner environment and less waste, especially with regard to non-permanent structures.

In a preferred embodiment of a first aspect, the invention refers to a set of connecting parts for connecting structural tubes (500) of non-circular section comprising:
- at least one first connecting part (10) in the shape of an L, comprising a first arm of first part (11) and a second arm of first part (12) wherein the first (11) and second (12) arms of first part are tubular, have a non-circular cross-section, and are either of the same length or of different lengths, and the first (11) and second (12) arms of first part form an angle *a* between them, and the first arm of first part (11) has an open end (111) and the second arm of first part (12) has an open end (121); and
- at least one second connecting part (20) in the form of a tube with a non-circular cross-section, said second connecting part (20) comprising a closed end (211) and an open end (212) wherein the surface of the closed end (211) forms an angle *b* with one of the walls of the second connecting part (20) and the closed end (211) comprises holes (21) that receive fastening elements;
wherein the first connecting part (10) is integral, obtained from a first single sheet (1), and the second connecting part (20) is integral, obtained from a second single sheet (2), wherein both the first (1) and second (2) single sheets have a thickness equal to the thickness of structural tubes (500) of non-circular section connected by the first connecting part (10) and second connecting part (20) and wherein the second connecting part (20) is fixed to an outer surface of the first connecting part (10) through fastening elements inserted into the holes (21); wherein this fastening is direct or is done through a wall of the structural tube (500).

In another embodiment of the first aspect, the set of connecting parts for connecting structural tubes (500) of non-circular section of the present invention further comprises:
- at least one third connecting part (30) in the shape of a T, comprising a first arm of third part (31) and a second arm of third part (32) wherein the first (31) and second (32) arms of third part are tubular, have a non-circular section, and are the same length or different lengths and the first (31) and second (32) arms form a perpendicular angle between them and the first arm of third part (31) comprises a first open end of third part (311) and a second open end of third part (312) and the second arm of third part (32) comprises a third open end of third part (321);
wherein the third connecting part (30) is composed of a first sub-part of third part (30A) and a second sub-part of third part (30B), wherein each of the first sub-part (30A) and second sub-part (30B) of third part are obtained from a third single sheet (3) and a fourth single sheet (4), respectively, wherein both the third (3) and fourth (4) single sheets have a thickness equal to the thickness of the structural tubes (500) of non-circular section that the third connecting part (30) connects and wherein the second sub-part of third part (30B) fits inside the first arm of third part (31) being fixed therein by friction.

In another embodiment of the first aspect, the set of connecting parts for connecting structural tubes (500) of non-circular section of the present invention further comprises:
- at least one fourth connecting part (40) in tubular form of non-circular section, comprising two open ends;
wherein the fourth connecting part (40) is composed of a first sub-part of fourth part (40A) and a second sub-part of fourth part (40B), wherein each of the first sub-part (40A) and second sub-part (40B) of fourth part are each obtained from a single fourth sheet (4), wherein the single fourth sheet (4) has a thickness equal to the thickness of the structural tubes (500) of non-circular section that the fourth connecting part (40) connects and wherein the second sub-part of fourth part (40B) fits inside the first sub-part of fourth part (40A) being fixed therein by friction.

In another embodiment of the first aspect according to the invention, the second connecting part (20) of the set of connecting parts for connecting structural tubes (500) of non-circular section is fixed to an outer surface of the third connecting part (30) and/or to an outer surface of the fourth connecting part (40) through fastening elements inserted into the holes (21); wherein this fastening is direct or is done through a structural tube wall (500).

Yet in another embodiment of the first aspect according to the invention, one or more sheets of the set of connecting parts for connecting structural tubes (500) of non-circular section of the group consisting of: third single sheet (3), fourth single sheet (4) comprise one or more friction elements (33) on its surface.

Yet in another embodiment of the first aspect according to the invention, angle *a* that the first arm of first part (11) and the second arm of first part (12) form between them belongs to the range from 10° to 170°, preferably from 30° to 150°, and more preferably angle *a* belongs to the range from 45° to 135°.

Yet in another embodiment of the first aspect according to the invention, angle *b* that the closed end (211) makes with one of the walls of the second connecting part (20) belongs to the range from 10° to 170°, preferably from 30° to 150°, and more preferably angle *b* belongs to the range from 45° to 135°.

In an embodiment of a second aspect, the invention refers to a process of producing the set of connecting parts according to the first aspect, comprising the following steps:
a) cutting one or more selected metal sheets from the group consisting of: first single sheet (1), second single sheet (2);
b) drilling at least one metal sheet selected from the group consisting of: first single sheet (1), second single sheet (2), cut in step a), wherein the drilling produces holes (21); and
c) bending one or more metal sheets selected from the group consisting of: first single sheet (1), second single sheet (2), cut in step a), wherein the bending produces at least one from the group consisting of: first connecting part (10), second connecting part (20), according to the first aspect of the invention.

In preferred embodiments of the second aspect of the present invention, the process of producing the set of connecting parts according to the first aspect of the invention, comprises:
- in cutting step a), two or more of the selected metal sheets from the group consisting of: third single sheet (3), fourth single sheet (4), are additionally cut;
- in drilling step b), one or more selected metal sheets from the group consisting of: third single sheet (3), fourth single sheet (4) are additionally drilled;
- in bending step c), two or more metal sheets selected from the group consisting of: third single sheet (3), fourth single sheet (4) cut in step a), are additionally bent, wherein in the bending at least two from the group consisting of: first subpart of third part (30A), second subpart of third part (30B), first subpart of fourth part (40A), second subpart of fourth part (40B) are additionally produced;
and it additionally comprises the following steps:
d) stamping one or more metal sheets selected from the group consisting of: third single sheet (3), fourth single sheet (4) cut in step a), wherein in the stamping, one or more friction elements (33) are produced towards the interior of the part which the third single sheet (3) and/or the fourth single sheet (4) is intended for; and
e) assembly of at least one of each of the subparts from the group consisting of: first subpart of third part (30A), second subpart of third part (30B), in order to produce at least one third connecting part (30) in T-shape according to the first aspect, wherein a second subpart of third part (30B) fits inside a first subpart of third part (30A) being fixed therein by means of the friction generated by the friction elements (33) obtained in step d) of stamping, wherein the stamping step d) is performed before the bending step c).

In other embodiments of the second aspect of the present invention, the process of producing the set of connecting parts according to the first aspect of the invention, the assembly step e) additionally comprises: assembly of at least one of each of the subparts from the group consisting of: first subpart of fourth part (40A), second subpart of fourth part (40B), so as to produce at least one fourth connecting part (40) as defined according to the first aspect of the invention, wherein the second subpart of fourth part (40B) fits inside the first subpart of fourth part (40A) and is secured therein by means of the friction generated by the friction elements (33) obtained in stamping step d).

In a third aspect, the present invention refers to a use of the set of connecting parts according to the first aspect of the invention, produced according to the second aspect of the invention, wherein the use is in the connection of two or more structural tubes (500), preferably metal structural tubes (500), of non-circular section, that compose preferably metallic structures.

### DEFINITIONS

As used in this application, the term "substantially" followed by perpendicular, rectangular, or quadrangular, for example, means that the elements said to be substantially perpendicular form a right angle with each other, plus or minus 10%, and the elements said to be rectangular, quadrangular, can approximate at least 80% of their shape to a rectangle or a square, respectively.

As used in this application, the term "or" is to be interpreted in an inclusive meaning instead of the exclusive meaning, unless otherwise clearly stated. That is, an expression like "X utilizes A or B" shall be interpreted as including all possible combinations, i.e., "X utilizes A", "X utilizes B", and "X utilizes A and B".

As used in this application, the indefinite article "a", "an", shall be interpreted as including "one" or "one or more", unless otherwise clearly stated for a specific case.

Throughout this application, the examples provided shall be interpreted as having the purpose to illustrate an example of and shall not be interpreted as preferences.

The subject-matter above-described is provided as an illustration of the present invention and shall not be interpreted as limiting it. The terminology used with the purpose of describing specific embodiments according to the present invention, shall not be interpreted as a limitation of the invention. As used in the description, the definite and indefinite articles, in their singular form, should be interpreted as also including their plural forms, unless otherwise clearly stated.

As used throughout the present application, the terms "comprise/comprises", "comprising", "include/includes", "including" specify the presence of the features, elements, components, steps, and related operations, and do not exclude whatsoever the presence of further features, elements, components, steps, and related operations.

All modifications, provided that they do not modify the essential characteristics of the claims that follow, must be considered within the scope of protection of the present invention.

### LIST OF REFERENCE INDICATIONS

1 - first single sheet
2 - second single sheet
3 - third single sheet
4 - fourth single sheet
10 - first connecting part
11 - first arm of the first part
12 - second arm of the first part
111 - open end of the first arm of the first part
121 - open end of the second arm of the first part
20 - second connecting part
21 - holes for fastening elements
211 - closed end of second part
212 - open end of second part
30 - third connecting part
30A - first sub-part of third part
30B - second sub-part of third part
31 - first arm of third part
32 - second arm of third part
33 - friction elements
311 - first open end of third part
312 - second open end of third part
321 - third open end of third part
40 - fourth connecting part
40A - first sub-part of fourth part
40B - second sub-part of fourth part
411 - first open end of the fourth part
412 - second open end of fourth part
66 - oblique cuts
87 - triple sidewalls
88 - double sidewalls
89 - flaps
98 - dashed lines
981 - full lines
99 - dotted lines
500 - structural metal tube
a - angle
b - angle

## Claims

1. A set of connecting parts for connecting structural tubes (500) of non-circular section comprising:
- at least one first connecting part (10) in the shape of an L, comprising a first arm of first part (11) and a second arm of first part (12) wherein the first (11) and second (12) arms of first part are tubular, have a non-circular cross-section, and are either of the same length or of different lengths, and the first (11) and second (12) arms of first part form an angle *a* between them, and the first arm of first part (11) has an open end (111) and the second arm of first part (12) has an open end (121); and
- at least one second connecting part (20) in the form of a tube with a non-circular cross-section, said second connecting part (20) comprising a closed end (211) and an open end (212) wherein the surface of the closed end (211) forms an angle *b* with one of the walls of the second connecting part (20) and the closed end (211) comprises holes (21) that receive fastening elements;
**characterized in that** the first connecting part (10) is integral, obtained from a first single sheet (1) and **in that** the second connecting part (20) is integral, obtained from a second single sheet (2), wherein both the first (1) and second (2) single sheets have a thickness equal to the thickness of structural tubes (500) of non-circular section connected by the first connecting part (10) and second connecting part (20) and wherein the second connecting part (20) is fixed to an outer surface of the first connecting part (10) through fastening elements inserted into the holes (21); wherein this fastening is direct or is done through a wall of the structural tube (500).

2. The set of connecting parts for connecting structural tubes (500) of non-circular section as claimed in claim 1, further comprising:
- at least one third connecting part (30) in the shape of a T, comprising a first arm of third part (31) and a second arm of third part (32) wherein the first (31) and second (32) arms of third part are tubular, have a non-circular section, and are the same length or different lengths and the first (31) and second (32) arms form a perpendicular angle between them and the first arm of third part (31) comprises a first open end of third part (311) and a second open end of third part (312) and the second arm of third part (32) comprises a third open end of third part (321);
**characterized in that** the third connecting part (30) is composed of a first sub-part of third part (30A) and a second sub-part of third part (30B), wherein each of the first sub-part (30A) and second sub-part (30B) of third part are obtained from a third single sheet (3) and a fourth single sheet (4), respectively, wherein both the third (3) and fourth (4) single sheets have a thickness equal to the thickness of the structural tubes (500) of non-circular section that the third connecting part (30) connects and wherein the second sub-part of third part (30B) fits inside the first arm of third part (31) being fixed therein by friction.

3. The set of connecting parts for connecting structural tubes (500) of non-circular section according to either claim 1 or 2, further comprising:
- at least one fourth connecting part (40) in tubular form of non-circular section, comprising two open ends;
**characterized in that** the fourth connecting part (40) is composed of a first sub-part of fourth part (40A) and a second sub-part of fourth part (40B), wherein each of the first sub-part (40A) and second sub-part (40B) of fourth part are each obtained from a single fourth sheet (4), wherein the single fourth sheet (4) has a thickness equal to the thickness of the structural tubes (500) of non-circular section that the fourth connecting part (40) connects and wherein the second sub-part of fourth part (40B) fits inside the first sub-part of fourth part (40A) being fixed therein by friction.

4. The set of connecting parts for connecting structural tubes (500) of non-circular section according to any one of claims 1 to 3,
**characterized in that** the second connecting part (20) is fixed to an outer surface of the third connecting part (30) and/or to an outer surface of the fourth connecting part (40) through fastening elements inserted into the holes (21); wherein this fastening is direct or is done through a structural tube wall (500).

5. The set of connecting parts for connecting structural tubes (500) of non-circular section according to any one of claims 2 to 4,
**characterized in that** one or more of the group consisting of: third single sheet (3), fourth single sheet (4) comprise one or more friction elements (33) on its surface.

6. The set of connecting parts for connecting structural tubes (500) of non-circular section according to any one of claims 1 to 5,
**characterized in that** angle *a* that the first arm of first part (11) and the second arm of first part (12) form between them belongs to the range from 10° to 170°, preferably from 30° to 150°, and more preferably angle *a* belongs to the range from 45° to 135°.

7. The set of connecting parts for connecting structural tubes (500) of non-circular section according to any one of claims 1 to 6,
**characterized in that** angle *b* that the closed end (211) makes with one of the walls of the second connecting part (20) belongs to the range from 10° to 170°, preferably from 30° to 150°, and more preferably angle *b* belongs to the range from 45° to 135°.

8. A process of producing the set of connecting parts as defined in any of the preceding claims,
**characterized by** comprising the following steps:
a) cutting one or more selected metal sheets from the group consisting of: first single sheet (1), second single sheet (2);
b) drilling at least one metal sheet selected from the group consisting of: first single sheet (1), second single sheet (2), cut in step a), wherein the drilling produces holes (21); and
c) bending one or more metal sheets selected from the group consisting of: first single sheet (1), second single sheet (2), cut in step a), wherein the bending produces at least one from the group consisting of: first connecting part (10), second connecting part (20), as defined in any one of claims 1 to 7.

9. The process of producing the set of connecting parts as defined in any of claims 2 to 7, as claimed in the previous claim,
**characterized in that**:
- in cutting step a), two or more of the selected metal sheets from the group consisting of: third single sheet (3), fourth single sheet (4), are additionally cut;
- in drilling step b), one or more selected metal sheets from the group consisting of: third single sheet (3), fourth single sheet (4) are additionally drilled;
- in bending step c), two or more metal sheets selected from the group consisting of: third single sheet (3), fourth single sheet (4) cut in step a), are additionally bent, wherein in the bending at least two from the group consisting of: first subpart of third part (30A), second subpart of third part (30B), first subpart of fourth part (40A), second subpart of fourth part (40B) are additionally produced;
and **in that** it additionally comprises the following steps:
d) stamping one or more metal sheets selected from the group consisting of: third single sheet (3), fourth single sheet (4) cut in step a), wherein in the stamping, one or more friction elements (33) are produced towards the interior of the part which the third single sheet (3) and/or the fourth single sheet (4) is intended for; and
e) assembly of at least one of each of the subparts from the group consisting of: first subpart of third part (30A), second subpart of third part (30B), in order to produce at least one third connecting part (30) in T-shape as defined in any one of claims 2 to 7, wherein a second subpart of third part (30B) fits inside a first subpart of third part (30A) being fixed therein by means of the friction generated by the friction elements (33) obtained in step d) of stamping;
wherein the stamping step d) is performed before the bending step c).

10. The process of producing the set of connecting parts as defined in any of claims 3 through 7, according to any of claims 8 or 9,
**characterized in that**:
- the assembly step e) additionally comprises:
assembly of at least one of each of the subparts from the group consisting of: first subpart of fourth part (40A), second subpart of fourth part (40B), so as to produce at least one fourth connecting part (40) as defined in any one of claims 3 to 7, wherein the second subpart of fourth part (40B) fits inside the first subpart of fourth part (40A) and is secured therein by means of the friction generated by the friction elements (33) obtained in stamping step d).

11. Use of the set of connecting parts as defined in any one of claims 1 to 7, wherein the parts are produced as defined in any one of claims 8, 9, or 10,
**characterized in that** the use is in the connection of two or more structural tubes (500), preferably metal structural tubes (500), of non-circular section that compose structures.

## Amended claims

### Amended claims under Art. 19.1 PCT

1. A set of connecting parts for connecting structural tubes (500) of non-circular section comprising:
- at least one first connecting part (10) in the shape of an L, comprising a first arm of first part (11) and a second arm of first part (12) wherein the first (11) and second (12) arms of first part are tubular, have a non-circular cross-section, and are either of the same length or of different lengths, and the first (11) and second (12) arms of first part form an angle *a* between them, and the first arm of first part (11) has an open end (111) and the second arm of first part (12) has an open end (121); and
- at least one second connecting part (20) in the form of a tube with a non-circular cross-section, said second connecting part (20) comprising a closed end (211) and an open end (212) wherein the surface of the closed end (211) forms an angle *b* with one of the walls of the second connecting part (20) and the closed end (211) comprises holes (21) that receive fastening elements;
**characterized in that** the first connecting part (10) is integral, obtained from a first single sheet (1) and **in that** the second connecting part (20) is integral, obtained from a second single sheet (2), wherein both the first (1) and second (2) single sheets have a thickness equal to the thickness of structural tubes (500) of non-circular section connected by the first connecting part (10) and second connecting part (20) and wherein the second connecting part (20) is fixed to an outer surface of the first connecting part (10) through fastening elements inserted into the holes (21); wherein this fastening is direct or is done through a wall of the structural tube (500); and wherein the at least one first connecting part (10) and the at least one second connecting part (20) are configured to fit in the interior of the said structural tube (500) of non-circular section.

2. The set of connecting parts for connecting structural tubes (500) of non-circular section as claimed in claim 1, further comprising:
- at least one third connecting part (30) in the shape of a T, comprising a first arm of third part (31) and a second arm of third part (32) wherein the first (31) and second (32) arms of third part are tubular, have a non-circular section, and are the same length or different lengths and the first (31) and second (32) arms form a perpendicular angle between them and the first arm of third part (31) comprises a first open end of third part (311) and a second open end of third part (312) and the second arm of third part (32) comprises a third open end of third part (321);
**characterized in that** the third connecting part (30) is composed of a first sub-part of third part (30A) and a second sub-part of third part (30B), wherein each of the first sub-part (30A) and second sub-part (30B) of third part are obtained from a third single sheet (3) and a fourth single sheet (4), respectively, wherein both the third (3) and fourth (4) single sheets have a thickness equal to the thickness of the structural tubes (500) of non-circular section that the third connecting part (30) connects and wherein the second sub-part of third part (30B) fits inside the first arm of third part (31) being fixed therein by friction.

3. The set of connecting parts for connecting structural tubes (500) of non-circular section according to either claim 1 or 2, further comprising:
- at least one fourth connecting part (40) in tubular form of non-circular section, comprising two open ends;
**characterized in that** the fourth connecting part (40) is composed of a first sub-part of fourth part (40A) and a second sub-part of fourth part (40B), wherein each of the first sub-part (40A) and second sub-part (40B) of fourth part are each obtained from a single fourth sheet (4), wherein the single fourth sheet (4) has a thickness equal to the thickness of the structural tubes (500) of non-circular section that the fourth connecting part (40) connects and wherein the second sub-part of fourth part (40B) fits inside the first sub-part of fourth part (40A) being fixed therein by friction.

4. The set of connecting parts for connecting structural tubes (500) of non-circular section according to any one of claims 1 to 3,
**characterized in that** the second connecting part (20) is fixed to an outer surface of the third connecting part (30) and/or to an outer surface of the fourth connecting part (40) through fastening elements inserted into the holes (21); wherein this fastening is direct or is done through a structural tube wall (500).

5. The set of connecting parts for connecting structural tubes (500) of non-circular section according to any one of claims 2 to 4,
**characterized in that** one or more of the group consisting of: third single sheet (3), fourth single sheet (4) comprise one or more friction elements (33) on its surface.

6. The set of connecting parts for connecting structural tubes (500) of non-circular section according to any one of claims 1 to 5,
**characterized in that** angle *a* that the first arm of first part (11) and the second arm of first part (12) form between them belongs to the range from 10° to 170°, preferably from 30° to 150°, and more preferably angle *a* belongs to the range from 45° to 135°.

7. The set of connecting parts for connecting structural tubes (500) of non-circular section according to any one of claims 1 to 6,
**characterized in that** angle *b* that the closed end (211) makes with one of the walls of the second connecting part (20) belongs to the range from 10° to 170°, preferably from 30° to 150°, and more preferably angle *b* belongs to the range from 45° to 135°.

8. A process of producing the set of connecting parts as defined in any of the preceding claims,
**characterized by** comprising the following steps:
a) cutting one or more selected metal sheets from the group consisting of: first single sheet (1), second single sheet (2);
b) drilling at least one metal sheet selected from the group consisting of: first single sheet (1), second single sheet (2), cut in step a), wherein the drilling produces holes (21); and
c) bending one or more metal sheets selected from the group consisting of: first single sheet (1), second single sheet (2), cut in step a), wherein the bending produces at least one from the group consisting of: first connecting part (10), second connecting part (20), as defined in any one of claims 1 to 7.

9. The process of producing the set of connecting parts as defined in any of claims 2 to 7, as claimed in the previous claim,
**characterized in that**:
- in cutting step a), two or more of the selected metal sheets from the group consisting of: third single sheet (3), fourth single sheet (4), are additionally cut;
- in drilling step b), one or more selected metal sheets from the group consisting of: third single sheet (3), fourth single sheet (4) are additionally drilled;
- in bending step c), two or more metal sheets selected from the group consisting of: third single sheet (3), fourth single sheet (4) cut in step a), are additionally bent, wherein in the bending at least two from the group consisting of: first subpart of third part (30A), second subpart of third part (30B), first subpart of fourth part (40A), second subpart of fourth part (40B) are additionally produced;
and **in that** it additionally comprises the following steps:
d) stamping one or more metal sheets selected from the group consisting of: third single sheet (3), fourth single sheet (4) cut in step a), wherein in the stamping, one or more friction elements (33) are produced towards the interior of the part which the third single sheet (3) and/or the fourth single sheet (4) is intended for; and
e) assembly of at least one of each of the subparts from the group consisting of: first subpart of third part (30A), second subpart of third part (30B), in order to produce at least one third connecting part (30) in T-shape as defined in any one of claims 2 to 7, wherein a second subpart of third part (30B) fits inside a first subpart of third part (30A) being fixed therein by means of the friction generated by the friction elements (33) obtained in step d) of stamping;
wherein the stamping step d) is performed before the bending step c).

10. The process of producing the set of connecting parts as defined in any of claims 3 through 7, according to any of claims 8 or 9,
**characterized in that**:
- the assembly step e) additionally comprises:
assembly of at least one of each of the subparts from the group consisting of: first subpart of fourth part (40A), second subpart of fourth part (40B), so as to produce at least one fourth connecting part (40) as defined in any one of claims 3 to 7, wherein the second subpart of fourth part (40B) fits inside the first subpart of fourth part (40A) and is secured therein by means of the friction generated by the friction elements (33) obtained in stamping step d).

11. Tubular structure, **characterized in that** it comprises two or more structural tubes (500) connected by the set of connecting parts as defined in any one of claims 1-7, wherein the connecting parts are produced as defined in any one of claims 8, 9 or 10.

12. Use of the set of connecting parts as defined in any one of claims 1 to 7, wherein the parts are produced as defined in any one of claims 8, 9, or 10,
**characterized in that** the use is in the connection of two or more structural tubes (500), preferably metal structural tubes (500), of non-circular section that compose structures.
***Letter- Statement Art. 19 PCT***
| *Type of amendment* | *Claim numbers* | *Basis* |
|---|---|---|
| *amended* | 1 | *page* 7 *of the application* as *filed* |
| *unchanged* | 2-10 | |
| *added* | 11 | *Figs. 12, 13, 14 and for example, pages 19, 20 of the description, paragraphs starting with* "Figure 12 represents...", "Figure 13 shows...", "Figure 14 represents...", and "Starting from the structure created...". |
| *renumbered* | 12 | *(former claim 11),* |

Statement under Art. 19.1 PCT
*Reference is made to item VIII of the Written Opinion of the International Searching Authority.*

*Applicant submits that the structural tubes per se are not part of scope of protection sought, as is stated in paragraph before last of page 9 of the application as filed. However, applicant recognizes that the structural tubes need to be present for the "set of connecting parts" to connect said tubes.*

*Claim 1 has been amended by adding the feature "and wherein the first and second connecting parts are configured to fit the internal section of said structural tubes (500) of non-circular section". This feature clarifies how the first and second connecting parts cooperate to connect the structural tubes. Basis for the amendment is found on page 7 of the application as filed.*

*Moreover, Applicant is now submitting a new claim (claim 11) directed to a structure wherein structural tubes (500) are connected by a set of parts of the invention. The basis for this amendment is to be found in several parts of the description and drawings, for example in Figs. 12, 13, 14 and pages 19, 20 of the description, paragraphs starting with* "Figure 12 represents...", "Figure 13 shows...", "Figure 14 represents...", and "Starting from the structure created...".

*Applicant trusts that there is no added matter, since the tubular structures connected by the set of connecting parts of the invention were disclosed in the application as filed and that claim 1 is now clear and the requirements of Art. 6 PCT are now met.*
